# EUROPÄISCHE PATENTSCHRIFT

(11) **EP 4 450 837 B1**
(45) Veröffentlichungstag und Bekanntmachung des Hinweises auf die Patenterteilung: **25.02.2026**
(21) Anmeldenummer: 23168302.0
(22) Anmeldetag: 17.04.2023
(51) Int. Cl.: F16B 45/02

(54) **WERKZEUGKARABINER ZUR SICHERUNG VON WERKZEUGEN AN EINEM GURT**
TOOL CARABINER FOR SECURING TOOLS TO A STRAP
MOUSQUETON D'OUTIL POUR FIXER DES OUTILS SUR UNE SANGLE

(43) Veröffentlichungstag der Anmeldung: 23.10.2024
(73) Patentinhaber: Teufelberger Fiber Rope GmbH, 4600 Wels (AT)
(72) Erfinder: Johrendt, Patrick, 4623 Gunskirchen (AT)
(74) Vertreter: Schwarz & Partner Patentanwälte GmbH

(56) Entgegenhaltungen:
- US-A1- 2009 134 300
- ANONYMOUS: "Camp - Kilo Materialkarabiner-1841.105.102", 23 September 2020 (2020-09-23), XP093077679, Retrieved from the Internet <URL:https://web.archive.org/web/20200923023044/https://climbtools.de/de/camp-kilo-materialkarabiner> [retrieved on 20230831]

## Beschreibung

Die Erfindung betrifft einen Werkzeugkarabiner zur Sicherung von Werkzeugen an einem Gurt, umfassend einen einseitig offenen Hauptteil und einen schwenkbar gelagerten Schnapper zum Verschließen und Öffnen des Hauptteils.

Aus dem Stand der Technik sind sogenannte Werkzeugkarabiner bekannt, die an Hüftgurten und Ganzkörpergurten und speziell an Baumklettergurten angebracht werden, um Ausrüstung und Werkzeuge am Gurt zu tragen.

Die Werkzeugkarabiner werden an den dafür vorgesehenen Stellen am Hüftgurt oder an den Beinschlaufen befestigt und stehen vom Gurt ab. Der Benutzer kann Ausrüstungsgegenstände und Werkzeuge leicht in den Werkzeugkarabiner einhängen und auch leicht wieder entfernen.

Es sei an dieser Stelle hervorgehoben, dass dem Begriff "Werkzeugkarabiner" (englisch: "racking carabiner") in der Fachsprache eine besondere Bedeutung zukommt, und ein Werkzeugkarabiner insbesondere nicht zur Personensicherung eingesetzt wird, da Personensicherungskarabiner aus Sicherheitsgründen besonders stabil ausgeführt werden müssen. Da Werkzeugkarabiner diesen Sicherheitsanforderungen nicht unterliegen, können diese z.B. leichtgewichtiger oder allgemeiner in anderen Dimensionen ausgeführt werden, als dies bei den genormten Personensicherungskarabinern der Fall ist.

Wie bereits eingangs erwähnt ist es der Zweck des Werkzeugkarabiners, das Werkzeug des Benutzers an einer vorbestimmten Stelle zu halten. Besonders wünschenswert ist daher auch eine besonders einfache Handhabung des Werkzeugkarabiners, um Werkzeug schnell an diesem zu sichern und von diesem zu entfernen. Da die Auswahl eines bestimmten Karabinertyps jedoch vom jeweiligen Benutzer, von der auszuführenden Tätigkeit und vom Werkzeug abhängig ist, werden verschiedene Typen von Werkzeugkarabinern angeboten und eingesetzt. Beispielsweise sind aus dem Stand der Technik einerseits Werkzeugkarabiner mit Vollschnappern bekannt und andererseits Werkzeugkarabiner mit Drahtschnappern. Weiters können Werkzeugkarabiner mit Schnappern eingesetzt werden, die unterschiedlichste Arten von Verschlusssicherungen aufweisen.

Die aus dem Stand der Technik bekannten Werkzeugkarabiner sind daher immer mit einem definierten Öffnungsmechanismus ausgestattet, z.B. mit einem Vollschnapper oder einem Drahtschnapper. Ist ein anderer Öffnungsmechanismus für eine bestimmte Tätigkeit bevorzugt, muss der ganze Werkzeugkarabiner ausgewechselt werden. Ein manuelles Austauschen der Schnapper von Werkzeugkarabinern kommt jedenfalls nicht in Frage, da der Schnapper mittels eines unlösbaren Stifts am Werkzeugkarabiner angelenkt ist. Ein Lösen und Wiedereinsetzen des Stifts zum Austausch des Schnappers ist aus Sicherheitsgründen problematisch, sodass auch hiervon abgesehen wird. In der Regel können Schnapper aber ohnehin nicht einzeln erworben werden, was auch sinnwidrig wäre, da diese nicht ausgewechselt werden können.

Die üblichen Entwicklungen bei Werkzeugkarabinern betreffen in der Regel das Problem der Anbindung des Werkzeugkarabiners an den Gurt. So lehren beispielsweise die Schriften EP4139580A1 und EP3001047A1 einen Werkzeugkarabiner mit verschwenkbarem Element, um den Gurt zwischen dem Hauptteil des Karabiners und dem verschwenkbaren Element einzuspannen. Das mit dem Schnapper ausgestattete verschwenkbare Element ist jedoch mittels eines Stifts permanent am Hauptteil angelenkt, wie z.B. aus Figur 42 der EP4139580A1 ersichtlich ist und damit nicht austauschbar.

Die Schriften US2017023176A1, WO2020174221A1 und US2021317866A1 zeigen weitere bekannte Möglichkeiten, um Karabiner am Gurt zu befestigen. Die US2020124082A1 zeigt einen besonderen Aufbau eines Schnappers mit auswechselbarer Verschlusssicherung. Ein weiterer Karabiner ist in der US2018320729A1 gezeigt.

Die US 2009/0134300 A1 offenbart einen Werkzeughalter, der einen Hauptteil aus einem flachen Material umfasst. An einem Ende ist das flache Material zu einer Schlaufe zur Befestigung am Gurt geformt. An dieser Stelle ist weiters ein Schnapper an den Hauptteil geschraubt.

Das Unternehmen Camp SpA vertreibt unter der Bezeichnung "Kilo" einen Metallkarabiner, der aus einem im Wesentlichen U-förmigen Hauptteil und einem daran montierbaren Schnappermontageteil mit einer L-förmigen Anschlussteil besteht. Zur Montage dieses Karabiners an einem Gurt wird der Gurt in einen Spalt zwischen dem Hauptteil und dem Anschlussteil des Schnappermontageteils geklemmt. Hier besteht der Nachteil, dass ein unabhängiges Wechseln von einzelnen Komponenten im Einsatz nicht möglich ist.

Es ist die Aufgabe der Erfindung, einen Werkzeugkarabiner zur Sicherung von Werkzeugen an einem Gurt zu schaffen, der die genannten Nachteile des Standes der Technik überwindet.

Dieses Ziel wird durch einen Werkzeugkarabiner gemäß Anspruch 1 gelöst.

Dieser Werkzeugkarabiner hat den Vorteil, dass der Schnapper ohne Sicherheitsbedenken ausgetauscht werden kann, da der Schnapper ein Element eines gesonderten Schnapperwechselteils ist, welches lösbar auf den Hauptteil montiert werden kann. Beim Auswechseln des Schnapperwechselteils kann insbesondere die Anlenkung des Schnappers im Originalzustand belassen werden, sodass z.B. ein Stift, der den Schnapper und den Anschlussteil durchsetzt, nicht entfernt werden muss.

Es kann nun somit ein Hauptteil und ein oder mehrere Schnapperwechselteile bereitgestellt werden, wobei das oder die Schnapperwechselteile auf den Hauptteil montiert werden können. Wenn ein Schnapperwechselteil nicht mehr funktionsfähig ist oder wenn der Benutzer einen Schnapper eines anderen Typs wünscht, kann das nicht mehr benötigte Schnapperwechselteil einfach demontiert und durch ein anderes Schnapperwechselteil ersetzt werden. Die erfindungsgemäße Lösung ist daher auch bei einem Schnapperwechsel desselben Typs vorteilhaft, da bei einem Gebrechen weniger Bauteile entsorgt werden müssen und der Hauptteil wiederverwertet werden kann.

Weiters umfasst der Hauptteil, bevorzugt der Rücken, Gurtmontagemittel, welche dazu ausgebildet sind, den Werkzeugkarabiner am Gurt zu befestigen, wobei der Anschlussteil unabhängig von den Gurtmontagemitteln vom Hauptteil lösbar ist. Dadurch ist ein Wechsel des Schnappers auch unabhängig von der Befestigung des Werkzeugkarabiners am Gurt möglich. Die erfindungsgemäße Lösung ist somit besonders benutzerfreundlich, da der Werkzeugkarabiner am Gurt verbleiben kann, während das Schnapperwechselteil demontiert und durch ein anderes Schnapperwechselteil ersetzt wird. Bevorzugt sind somit das Schnapperwechselteil und die Anbindung des Werkzeugkarabiners an den Gurt strukturell voneinander gesondert, sodass einerseits der Werkzeugkarabiner vom Gurt genommen werden kann, ohne dass das Schnapperwechselteil demontiert oder montiert werden müsste, und andererseits das Schnapperwechselteil demontiert und/oder ausgetauscht werden kann, ohne dass der Werkzeugkarabiner von Gurt genommen werden muss.

Der Hauptteil setzt sich aus einem Rücken, aus einer an den Rücken anschließenden Auskragung und aus einem an den Rücken anschließenden Bogen zusammen, wobei die einseitige Öffnung des Hauptteils zwischen der Auskragung und dem Bogen vorliegt, und wobei der Anschlussteil lösbar mit der Auskragung verbindbar ist. Die Auskragung steht besonders bevorzugt in einem 90°-Winkel zum Rücken, sodass der Hauptteil eine klassische Karabinerform einnehmen kann. Der Hauptteil könnte jedoch auch anders geformt sein, sodass beispielsweise der Bogen nicht zwingend notwendig ist und durch eine eckige Lösung ersetzt werden kann oder indem die Auskragung in einem Winkel von ungleich 90° zum Rücken steht.

Bevorzugt liegt zwischen dem Hauptteil und dem Schnapperwechselteil ein Schienensystem vor, d.h. der Hauptteil umfasst zumindest eine Nut oder zumindest einen Steg und der Anschlussteil umfasst zumindest einen zur Nut gegengleichen Steg oder zumindest eine zum Steg gegengleiche Nut, sodass der Anschlussteil auf den Hauptteil aufschiebbar ist. Dadurch kann dem Benutzer eine genaue Positionierung des Schnapperwechselteils auf dem Hauptteil vorgegeben werden und gleichzeitig eine gegenseitige Stabilisierung der Elemente geschaffen werden, da das Schnapperwechselteil nicht in Querrichtung zum Schienensystem verschoben werden kann. Eine gegebenenfalls zusätzlich vorhandene Schraubverbindung (oder sonstige Verbindung) zwischen Hauptteil und dem Schnapperwechselteil ist in der Folge weniger Scherkräften ausgesetzt.

Wenn das Schienensystem als Schwalbenschwanzverbindung ausgeführt ist, wird weiters eine Vertikalbewegung des Schnapperwechselteil vom Hauptteil unterbunden, sodass eine gegebenenfalls zusätzlich vorhandene Schraubverbindung (oder sonstige Verbindung) noch geringeren Belastungen ausgesetzt ist.

Alternativ oder zusätzlich zum genannten Schienensystem können der Anschlussteil und der Hauptteil jeweils ein Loch für eine Schraube aufweisen, um den Anschlussteil mittels der Schraube am Hauptteil zu fixieren. Schraubverbindungen sind besonders bevorzugt, um das Schnapperwechselteil am Hauptteil zu fixieren, da Schrauben mit einfachen Mitteln sicher und zuverlässig auch von ungeschulten Benutzern benutzt werden können. Der Anschlussteil kann zudem eine Vertiefung für den Schraubenkopf aufweisen, damit dieser vollständig im Anschlussteil aufgenommen werden kann, sodass die Schraube keine externe Erhöhung bewirkt. Um die Schraube zu fixieren, können die Löcher ein Innengewinde aufweisen oder eine Mutter kann auf das dem Schraubenkopf gegenüberliegende Ende geschraubt werden. Der Anschlussteil und der Hauptteil können auch jeweils zwei oder mehr Löcher für mehrere Schrauben aufweisen, sodass auf ein Schienensystem auch vollständig verzichtet werden kann.

In den vorgenannten Ausführungsformen ist besonders bevorzugt, wenn der Bogen an jenem Ende, das der Öffnung zugewandt ist, eine Nase zum Eingriff mit dem Schnapper aufweist. Dadurch kann der Schnapper in der geschlossenen Position stabil von der Nase gehalten werden, wodurch sich der Schnapper z.B. auch nicht nach außen öffnen lässt, wenn im Werkzeugkarabiner gesicherte Werkzeuge den Schnapper belasten.

Die genannten Gurtmontagemittel können beliebig ausgeführt werden, z.B. auch wie aus dem Stand der Technik bekannt. Bevorzugt ist aber, wenn die Gurtmontagemittel eine in den Hauptteil eindringende Gurtsicherungsschraube umfassen, da Schrauben wie bereits erwähnt vom Endbenutzer sicher und zuverlässig fixiert und gelöst werden können. Weiters können die Gurtmontagemittel auch eine Lasche umfassen, welche am Hauptteil in beliebiger Art und Weise fixierbar ist, um ein Gurtband zwischen dem Hauptteil und der Lasche zu fixieren.

Wenn eine oder mehrere Schrauben ohne eine Lasche eingesetzt werden, gibt es in der Regel am Gurt ein Gegenstück, das eine Fixierung des Werkzeugkarabiners mittels der Schraube ermöglicht. Die Schraube durchdringt somit den Hauptteil und das Gegenstück am Gurt. Der Werkzeugkarabiner wird in dieser Ausführungsform somit an einer vorbestimmten Stelle am Gurt befestigt, wo bereits ein Gegenstück für die Schraube vorgesehen ist.

Alternativ, wenn der Gurt beispielsweise keine Gegenstücke für die Schraube aufweist oder wenn der Werkzeugkarabiner an einer anderen Stelle des Gurtes angebracht werden soll, kann die genannte Lasche eingesetzt werden, um ein Gurtband des Gurtes zwischen dem Hauptteil und der Lasche zu fixieren. Wenn die Lasche mittels einer Schraube am Hauptteil befestigt wird, sichern die Schrauben die Lasche am Werkzeugkarabiner und dringen insbesondere nicht in ein Gegenstück am Gurt ein. Wird nur eine Lasche ohne Schrauben am Hauptteil befestigt, kann die Lasche beispielsweise in Fortsätze am Hauptteil eingeschoben werden, um die Lasche am Werkzeugkarabiner zu fixieren.

Besonders bevorzugt ist der Schnapper ein Drahtschnapper oder ein Vollschnapper, wobei der Vollschnapper gegebenenfalls eine Verschlusssicherung aufweist. Es kann zudem ein weiteres Schnapperwechselteil bereitgestellt werden, das einen Schnapper des jeweils anderen Typs umfasst, sodass durch Auswechseln der Schnapperwechselteile auch ein Wechsel des Schnappertyps stattfindet. In anderen Worten kann dem Werkzeugkarabiner ein weiteres Schnapperwechselteil beigelegt werden, welches ein weiteres Anschlussteil umfasst, an welchem ein weiterer Schnapper unlösbar angelenkt ist, wobei das weitere Anschlussteil lösbar mit dem Hauptteil verbindbar ist, und der weitere Schnapper bevorzugt von einem anderen Typ als der erstgenannte Schnapper ist. Der Hauptteil und das eine, die zwei oder die mehr als zwei Schnapperwechselteile können als Kit-of-Parts vertrieben werden, sodass der endgültige Zusammenbau erst durch den Endbenutzer vorgenommen wird. Wenn das Kit-of-Parts zwei oder mehr Schnapperwechselteile umfasst, kann es sich auch um gleiche Schnapperwechselteile handeln, um eine Reparaturmöglichkeit bereitzustellen.

Dem Werkzeugkarabiner kann auch ein weiteres (schnapperloses) Schnapperwechselteil beigelegt werden, welches ein weiteres Anschlussteil ohne Schnapper umfasst. Dies kann bevorzugt werden, wenn der Endbenutzer einen offenen Werkzeugkarabiner wünscht und z.B. das Schienensystem vor Verschmutzung gesichert werden soll.

Erfindungsgemäß wird somit auch ein Gurt geschaffen, insbesondere ein Hüftgurt oder ein Ganzkörpergurt, besonders bevorzugt ein Baumklettergurt, der einen Werkzeugkarabiner nach einer der vorgenannten Varianten umfasst, wobei der Werkzeugkarabiner, bevorzugt ein Rücken des Werkzeugkarabiners, am Gurt, insbesondere an einem Gurtband im Bereich der Hüfte oder an einer Beinschlaufe des Gurtes, befestigt ist.

Weiters schafft die Erfindung ein Schnapperwechselteil für einen Werkzeugkarabiner, gemäß Anspruch 12, wobei das Schnapperwechselteil einen Anschlussteil und einen unlösbar am Anschlussteil angelenkten Schnapper umfasst, wobei der Anschlussteil lösbar mit einem Hauptteil des Werkzeugkarabiners verbindbar ist. Dieses Schnapperwechselteil kann als Ersatzteil für einen Werkzeugkarabiner in einer der vorgenannten Varianten eingesetzt werden. Das erfindungsgemäße Schnapperwechselteil kann in dieselben Ausführungsvarianten ausgestaltet werden, wie oben für den Werkzeugkarabiner erläutert.

In einem weiteren Aspekt schafft die Erfindung ein Verfahren, gemäß Anspruch 13, zum Wechseln eines Schnappers, umfassend die Schritte des Bereitstellens eines Werkzeugkarabiners nach einer der vorgenannten Ausführungsformen, Abnehmen des Schnapperwechselteils vom Hauptteil, und Aufsetzen eines weiteren Schnapperwechselteils auf den Hauptteil, welches bevorzugt einen Schnapper eines anderen Typs umfasst als das erstgenannte Schnapperwechselteil. Bevorzugt ist ein Schienensystem zwischen dem Hauptteil und dem bzw. den Schnapperwechselteilen vorgesehen, wobei das Verfahren hier den weiteren Schritt des Einschiebens des Steges (des Hauptteils oder des weiteren Schnapperwechselteils) in die Nut (des jeweils anderen Teils) umfasst, um das weitere Schnapperwechselteil auf den Hauptteil aufzusetzen.

Bevorzugte Ausführungsformen des in den angehängten Ansprüchen beanspruchten Werkzeugkarabiners werden nun im Folgenden anhand der Figuren näher erläutert.
Figur 1 zeigt einen erfindungsgemäßen Werkzeugkarabiner mit Hauptteil und Schnapperwechselteil im zusammengesetzten Zustand in einer schematischen Perspektivansicht.
Figur 2 zeigt den Werkzeugkarabiner von Figur 1 in einer schematischen Seitenansicht.
Figur 3 zeigt den erfindungsgemäßen Werkzeugkarabiner von Figur 1 im auseinandergenommenen Zustand zum Wechsel des Schnapperwechselteils.
Figur 4 zeigt einen erfindungsgemäßen Werkzeugkarabiner, der einen Drahtschnapper umfasst, in einer schematischen Perspektivansicht.
Figur 5 zeigt den Werkzeugkarabiner von Figur 4 in einer schematischen Seitenansicht.
Figur 6 zeigt einen erfindungsgemäßen Werkzeugkarabiner mit Schnapperwechselteil, das schnapperlos ausgeführt ist.

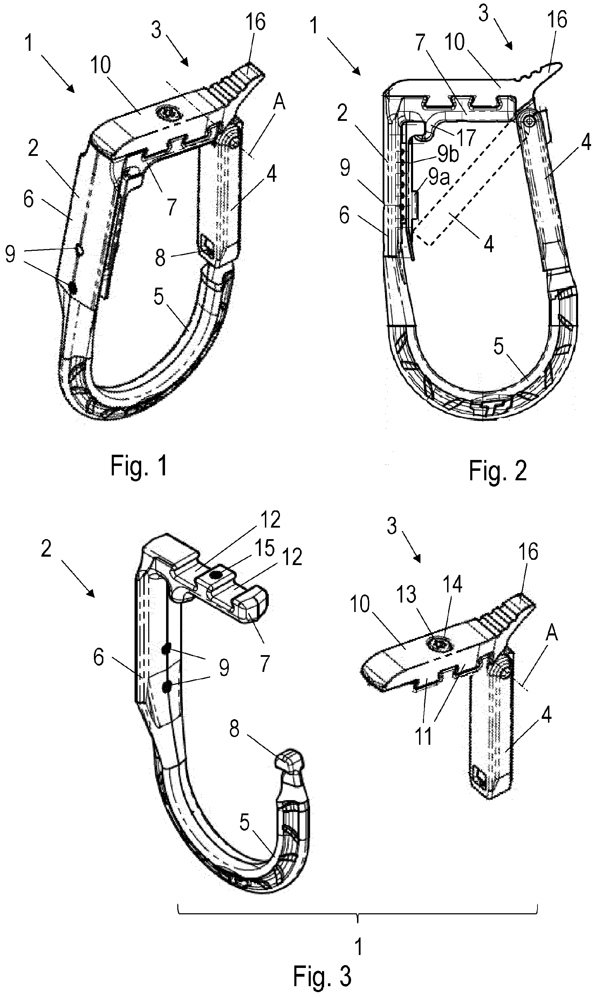

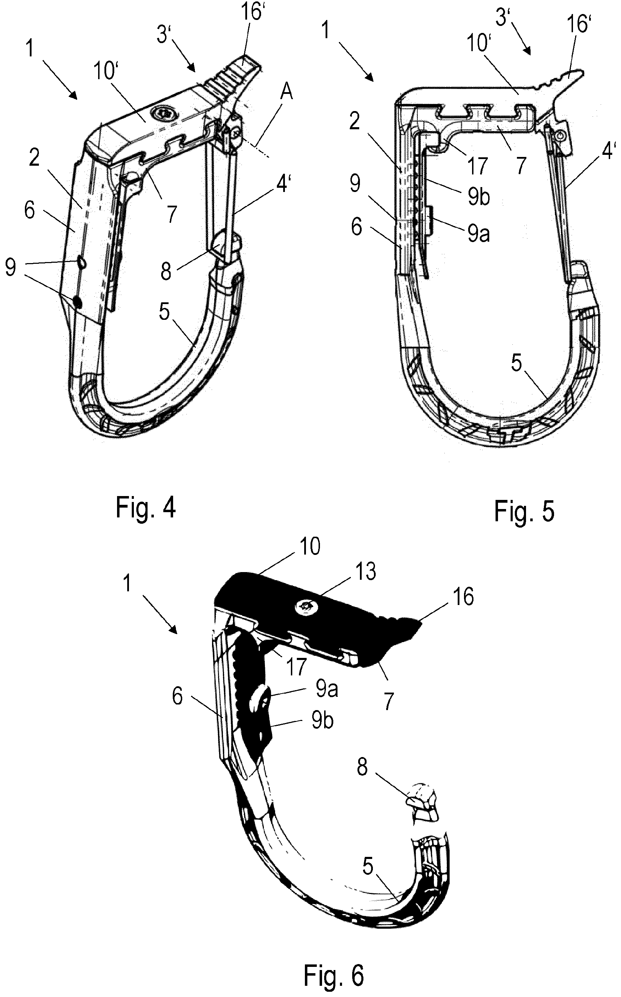

Die Figuren 1 und 2 zeigen einen Werkzeugkarabiner 1, der sich aus einem Hauptteil 2 und einem Schnapperwechselteil 3 zusammensetzt. Der Werkzeugkarabiner 1 wird in der Regel zur Sicherung von Werkzeugen an einem nicht weiter dargestellten Gurt eingesetzt, z.B. an einem Hüftgurt oder einem Ganzkörpergurt, insbesondere an einem Baumklettergurt. Die Erfindung ist jedoch nicht auf diese konkreten Anwendungszwecke beschränkt, sodass der Werkzeugkarabiner 1 beispielsweise auch an anderen Typen von Gurten montiert werden könnte. Das allgemeine Konzept der Anbindung an den Gurt ist nicht erfindungswesentlich, jedoch werden besondere Ausführungsformen, die sich besonders gut mit dem abnehmbaren Schnapperwechselteil 3 kombinieren lassen, weiter unten in Bezug auf die Figuren 5 und 6 näher erläutert.

Erfindungsgemäß besteht der Werkzeugkarabiner 1 aus dem Hauptteil 2, das mit dem Gurt verbunden werden soll, und dem Schnapperwechselteil 3, das einen Schnapper 4 trägt, wobei der Hauptteil 2 und das Schnapperwechselteil 3 lösbar voneinander ausgeführt sind, wodurch das Schnapperwechselteil 3 und in der Folge der Schnapper 4 auswechselbar ausgeführt sind (Figur 3). Es ist insbesondere ersichtlich, dass der Schnapper 4 ein Bestandteil des Schnapperwechselteils 3 ist und nicht am Hauptteil 2 angelenkt ist.

Im zusammengesetzten Zustand des Hauptteils 2 und des Schnapperwechselteils 3 nimmt der Werkzeugkarabiner 1 eine Form an, die einem herkömmlichen Werkzeugkarabiner ähnlich ist. Um dies umzusetzen, umfasst der Hauptteil 2 üblicherweise wie dargestellt einen Bogen 5, einen Rücken 6 und eine Auskragung 7, wobei der Rücken 6 zwischen dem Bogen 5 und der Auskragung 7 angeordnet ist. Dies ist insbesondere aus Figur 3 ersichtlich. Auch ist ersichtlich, dass der Hauptteil 2 einseitig geöffnet ausgestaltet ist und diese Öffnung, wie in den Figuren 1 und 2, 4 und 5 dargestellt, durch den Schnapper 4 geschlossen werden kann.

Der Bogen 5 ist üblicherweise jener Teil, der bei Montage am Gurt bzw. im Betrieb unten angeordnet ist, sodass die Werkzeuge auf den Bogen 5 gehängt werden können. Der Bogen 5 kann beispielsweise eine Krümmung von im Wesentlichen 180° aufweisen, sodass die beiden Enden des Bogens 5 im Wesentlichen in dieselbe Richtung zeigen. An einem Ende des Bogens 5 schließt der Rücken 6 an und das andere Ende des Bogens 5 ist frei, sodass darauf der Schnapper 4 ansetzen kann, wenn dieser in eine geschlossene Stellung gebracht wird. An diesem Ende des Bogens 5, das nicht an den Rücken 6 anschließt, kann eine Nase 8 vorgesehen werden, die zum Eingriff des Schnappers 4 ausgebildet ist.

Der Rücken 6 ist zur Anbindung an den Gurt ausgebildet und ist zu diesem Zweck bevorzugt geradlinig, d.h. bevorzugt nicht gekrümmt, ausgeführt. Beispielsweise kann der Rücken 6 einfach ein oder zwei oder mehr als zwei Durchgangslöcher 9 aufweisen, durch welche jeweils eine Gurtsicherungsschraube 9a verbracht werden kann, die je nach Ausführungsform weiters ein Gegenstück des Gurtes oder eine Lasche 9b durchsetzen kann, um den Werkzeugkarabiner 1 in dieser Weise am Gurt zu befestigen.

Um den Werkzeugkarabiner 1 am Gurt zu befestigen, kann nun eine Gurtsicherungsschraube 9a durch eine der Durchgangsöffnungen 9 und ein entsprechendes Gegenstück im Gurt geführt werden. Wenn zwei oder mehr Durchgangsöffnungen 9 im Hauptteil 2 vorgesehen sind, können gegebenenfalls auch zwei oder mehr unmittelbar nebeneinanderliegende Gegenstücke im Gurt vorgesehen sein, um den Werkzeugkarabiner 1 mittels zwei oder mehr Gurtsicherungsschrauben 9a gleichzeitig am Gurt zu befestigen.

Alternativ, wenn der Werkzeugkarabiner 1 an einem Gurtband des Gurtes befestigt werden soll, kann die bereits erwähne Lasche 9b eingesetzt werden, um das Gurtband zwischen dem Hauptteil 2 und der Lasche 9b zu halten. Um die Lasche 9b am Hauptteil 2 zu fixieren, kann die Lasche z.B. mit einem Ende in einen Fortsatz 17 eingehängt werden und am anderen Ende kann eine Gurtsicherungsschraube 9a die Lasche 9b und eine der Durchgangsöffnungen 9 durchsetzen. Auch in diesem Fall macht es Sinn, wenn zwei oder mehr Durchgangsöffnungen 9 im Hauptteil 2 vorgesehen sind, da unterschiedlich lange Laschen 9b am Hauptteil 2 montierbar sind, um wiederum unterschiedlich breite Gurtbänder zwischen dem Hauptteil 2 und der Lasche 9b zu fixieren. Beispielsweise könnte mit einer oberen Durchgangsöffnung 9 ein Gurtband mit einer Breite von 25 mm und mit einer unteren Durchgangsöffnung 9 ein Gurtband mit einer Breite von 45 mm fixiert werden. In anderen Varianten könnte der Hauptteil 2 auch zwei Fortsätze 17 umfassen, in welchen die Lasche 9b fixiert werden kann, in welchem Fall gar keine Durchgangsöffnungen 9 vorgesehen werden müssen, oder die Lasche 9b könnte mittels zwei Gurtsicherungsschrauben 9a am Hauptteil 2 fixiert werden, um das Gurtband zwischen den Durchgangsöffnungen 9 und zwischen dem Rücken 6 und der Lasche 9b zu halten.

Weitere Varianten zur Fixierung des Gurtes, die mit dem erfindungsgemäßen Schnapperwechselteil 3 kombinierbar sind, sind z.B. gesonderte Klemmeinrichtungen wie in den eingangs zitierten Schriften US2017023176A1, WO2020174221A1 gezeigt oder ein Durchgangsloch im Rücken 6, wie in der Schrift US2021317866A1 gezeigt ist. Es können somit auch andere Mittel als die Durchgangslöcher 9, die Gurtsicherungsschrauben 9a und die Lasche 9b vorgesehen werden, um den Werkzeugkarabiner 1 am Gurt zu befestigen. Im Allgemeinen wird daher davon gesprochen, dass der Werkzeugkarabiner 1 mittels Gurtmontagemitteln am Gurt oder an einem Gurtband des Gurtes befestigt wird. Die Gurtmontagemittel liegen am Rücken 6 vor und interferieren nicht mit der Befestigung des Schnapperwechselteils 3 an der Auskragung 7.

Die Auskragung 7 ist jener Abschnitt des Hauptteils 2, an dem das Schnapperwechselteil 3 lösbar verbindbar ist, um das Schnapperwechselteil 3 auswechselbar am Hauptteil 2 zu montieren. Die Auskragung 7 kann beispielsweise geradlinig, d.h. bevorzugt nicht gekrümmt, ausgeführt werden und z.B. im Wesentlichen in einem rechten Winkel zum Rücken 6 angeordnet werden. Ein Ende der Auskragung 7 ist somit mit dem Rücken 6 verbunden und das andere Ende der Auskragung 7 ist frei. Im Gegensatz zu den üblichen Werkzeugkarabinern 1 ist der Schnapper 4 insbesondere nicht an der Auskragung 7 angelenkt. Da ein Ende der Auskragung 7 frei ist und ein Ende des Bogens 6 frei ist, wird hierin auch von einem einseitig geöffneten Hauptteil 2 gesprochen, da sich zwischen diesen beiden Enden eine Öffnung ausbildet.

Wie auch aus Figur 3 ersichtlich ist, ist der Hauptteil 2 üblicherweise einstückig gefertigt, d.h. der Bogen 5 und die Auskragung 7 können einstückig an den Rücken 6 ansetzen. Beispielsweise kann der Hauptteil 2 ein Metallbauteil oder ein Kunststoffbauteil sein, das einstückig gefertigt wurde. In anderen Ausführungsformen könnte auch vorgesehen werden, dass der Hauptteil 2 mehrstückig und gegebenenfalls auch aus unterschiedlichen Materialien gefertigt wird.

Das Schnapperwechselteil 3 setzt sich seinerseits zusammen aus dem Schnapper 4 und einem Anschlussteil 10. Der Schnapper 4 ist am Anschlussteil 10 um eine Achse A schwenkbar gelagert. Wenn das Schnapperwechselteil 3 auf den Hauptteil 2 aufgesetzt ist, schwenkt der Schnapper 4 üblicherweise im Hauptteil 2 nach innen, wie in Figur 2 durch den strichlierten Schnapper 4 angedeutet ist, um so eine geöffnete Stellung einzunehmen. In dieser Stellung kann Werkzeug in den Hauptteil 2 eingeführt werden, wonach der Schnapper 4 wieder in die geschlossene Stellung verbracht werden kann. Am Rücken 6 kann auch eine Halteeinrichtung vorgesehen sein, um den Schnapper 4 in der geöffneten Stellung zu halten.

Das Schnapperwechselteil 3 kann weiters eine Feder umfassen, die zwischen dem Schnapper 4 und dem Anschlussteil 10 vorgesehen ist, um den Schnapper 4 in die geschlossene Stellung vorzuspannen. Es versteht sich, dass die Feder den Schnapper 4 auch in diese vorbestimmte Stellung vorspannen wird, wenn das Schnapperwechselteil 3 vom Hauptteil 2 abgenommen wird.

Um den Schnapper 4 schwenkbar auszugestalten, kann dieser z.B. an einem Ende gabelförmig ausgestaltet sein und mit diesem Ende einen Fortsatz des Anschlussteils 10 umgreifen, sodass an dieser Stelle ein Stift durch den Schnapper 4 und den Anschlussteil 10 geführt werden kann. Dadurch kann der Schnapper 4 unlösbar am Anschlussteil 10 angelenkt sein. Es wären jedoch auch andere Varianten möglich, um den Schnapper 4 unlösbar am Anschlussteil 10 anzulenken. Der Begriff "unlösbar angelenkt" bedeutet hierin, dass diese Verbindung nicht durch den Endbenutzer lösbar ist. Ein Techniker mit entsprechendem Spezialwerkzeug könnte diese Verbindung jedoch auch lösen, wobei ein abermaliges Zusammensetzen der Bauteile aus Sicherheitsgründen nicht durchgeführt werden sollte.

Das Schnapperwechselteil 3 ist somit mehrstückig ausgebildet, wodurch der Schnapper 4 und der Anschlussteil 10 aus denselben oder verschiedenen Materialien gefertigt werden können. Beispielsweise könnte der Schnapper 4 aus Metall und der Anschlussteil 10 aus Kunststoff gefertigt sein.

Um das Schnapperwechselteil 3 lösbar auf dem Hauptteil 2 zu fixieren, können unterschiedliche Mittel eingesetzt werden. Bevorzugt wird ein Schienensystem eingesetzt, was einerseits die Stabilität des Werkzeugkarabiners 1 erhöht und andererseits auch dem Benutzer das Montieren des Schnapperwechselteils 3 auf dem Hauptteil 2 erleichtert. Wie in den Figuren 1 bis 3 dargestellt, kann die Auskragung 7 zwei Nuten 12 umfassen, in welche zwei Stege 11 des Anschlussteils 10 eingreifen. Im Allgemeinen können auch eine oder mehr als zwei Stege und gegengleiche Nuten vorgesehen werden und die Auskragung 7 könnte die Stege 11 umfassen und der Anschlussteil 10 Nuten 12. Es könnte auch ein gemischtes System zum Einsatz kommen, in welchem die Auskragung 7 sowohl Stege 11 als auch Nuten 12 aufweist und der Anschlussteil 10 gegengleich sowohl Nuten 12 als auch Stege 11 aufweist.

Wie dargestellt können die Nuten und Stege eine Schwalbenschwanzverbindung bilden. Die Schwalbenschwanzverbindung bewirkt, dass der Anschlussteil 10 nicht in vertikaler Richtung von der Auskragung 7 abgehoben werden kann. Unter einer Schwalbenschwanzverbindung wird hierin verstanden, dass sich die Nuten 12 und Stege 11 unterhalb der Auflagefläche erweitern, um eine formschlüssige Verbindung zu bilden. Alternativ könnten jedoch andere Schienensysteme eingesetzt werden. Beispielsweise könnten die Auskragung 7 und der Anschlussteil 10 wellenförmige Auflageflächen aufweisen, um eine konkrete Anbauposition vorzugeben. In wieder anderen Ausführungsformen könnte auch überhaupt kein Schienensystem zum Einsatz kommen, z.B. wenn die Auskragung 7 und der Anschlussteil 10 ebene Auflageflächen aufweisen.

Zusätzlich zu dem Schienensystem von Figur 3 wird eine Schraubverbindung eingesetzt, um die Auskragung 7 in einer vorbestimmten Position auf dem Anschlussteil 10 zu halten. Aus den Figuren 1 bis 3 ist ersichtlich, dass das Schienensystem nur eine Bewegung des Schnapperwechselteils 3 in einem Freiheitsgrad ermöglicht, sodass das Schnapperwechselteil 3 auf den Hauptteil 2 aufgeschoben werden kann. Um das Schnapperwechselteil 3 in seiner endgültigen Position lösbar zu fixieren, wird eine Schraube 13 in Löcher 14, 15 eingesetzt, welche den Anschlussteil 10 und die Auskragung 7 durchsetzen (wobei eines der Teile gegebenenfalls auch nur teilweise durchsetzt werden kann). Durch Entfernen der Schraube 13 und Herausschieben des Schnapperwechselteils 3 aus dem Hauptteil 2 können diese beiden Teile voneinander gelöst werden.

Es versteht sich, dass das anhand der Figuren 1 bis 3 erläuterte System zur lösbaren Befestigung des Schnapperwechselteils 3 auf der Auskragung 7 nur eine von mehreren Varianten ist. In anderen Varianten könnte anstelle der Schraube 13 auch ein Einrastmechanismus vorgesehen werden, bei dem der Anschlussteil 10 in der Auskragung 7 einschnappt, wenn er vollständig in das Schienensystem eingeführt wurde. Das Schnapperwechselteil 3 könnte so auch mit genügend Kraft und ohne weitere Werkzeuge wieder vom Hauptteil 2 abgenommen werden.

Auch könnten zwei oder mehr Schrauben 13 und zugehörige Löcher 14, 15 zwischen der Auskragung 7 und dem Anschlussteil 10 vorgesehen werden, in welchem Fall auch kein Schienensystem notwendig ist, da die zwei Schrauben 13 das Schnapperwechselteil 3 bereits in allen Freiheitsgraden am Hauptteil 2 befestigen können. In wieder anderen Varianten könnten auch eine oder mehrere zusätzliche externe Klemmen eingesetzt werden, welche sowohl die Auskragung 7 als auch den Anschlussteil 10 umgreifen und diese so in Position halten.

Die vorgenannten Varianten ermöglichen, dass das Schnapperwechselteil 3 lösbar auf dem Hauptteil 2 befestigt werden kann, wobei es beim Auswechseln keine Sicherheitsbedenken gibt, da z.B. lediglich eine oder mehrere Schrauben entfernt und wieder eingesetzt werden, was auch durch einen Endbenutzer möglich ist. Insbesondere kann jedoch die sicherheitskritische Anlenkung des Schnappers 4 am Anschlussteil 10 unberührt bleiben, wodurch diese vom Hersteller unlösbar ausgestaltet werden kann.

Das vorgenannte System ermöglicht beispielsweise, dass das Schnapperwechselteil 3 ausgewechselt werden kann, wenn dieses defekt ist. Das Schnapperwechselteil 3 könnte jedoch auch mit einem anderen Schnapperwechselteil 3 ausgetauscht werden, z.B. um einen Schnapper 4 eines anderen Typs einzusetzen. Beispielsweise ist in den Figuren 1 bis 3 ein Schnapperwechselteil 3 dargestellt, das einen als Vollschnapper ausgeführten Schnapper 4 aufweist. Die Erfindung ermöglicht nun beispielsweise, dass das genannte Schnapperwechselteil 3 mit einem weiteren Schnapperwechselteil 3' ausgetauscht werden kann, dessen Schnapper 4' als Drahtschnapper ausgeführt ist (Figuren 4 und 5).

Im Detail zeigen die Figuren 4 und 5 einen Werkzeugkarabiner 1, bei dem ein Hauptteil 2 zum Einsatz kommt, das baugleich zum Hauptteil 2 der Figuren 1 bis 3 ausgestaltet ist, sodass hierzu die gleichen Bezugszeichen vorgesehen werden. Es könnte sich sogar um dasselbe Hauptteil 2 der Figuren 1 bis 3 handeln. Das weitere Schnapperwechselteil 3' der Figuren 4 und 5 unterscheidet sich von dem Schnapperwechselteil 3 der Figuren 1 bis 3 lediglich dadurch, dass der Schnapper 4' von einem anderen Typ ist und als Drahtschnapper ausgeführt ist. Insbesondere ist jedoch das weitere Anschlussteil 10' des weiteren Schnapperwechselteils 3' gleich wie der Anschlussteil 10 des erstgenannten Schnapperwechselteils 3 ausgestaltet. Allgemeiner könnte formuliert werden, dass zumindest eine Auflagefläche des weiteren Anschlussteils 10' mit der Auskragung 7 kompatibel ausgestaltet ist. Somit könnte sich das weitere Anschlussteil 10' des weiteren Schnapperwechselteils 3' auch vom Anschlussteil 10 des erstgenannten Schnapperwechselteils 3 unterscheiden, z.B. in der Form der Spitze 16' oder der Federstärke zum Vorspannen des Schnappers 4'.

Es sind jedoch nicht nur die beiden Schnappertypen möglich, die in den Figuren 1 bis 3 bzw. 4 und 5 dargestellt sind. Beispielsweise könnte auch ein Schnapperwechselteil 3 eingesetzt werden, dessen Schnapper 4 eine Verschlusssicherung aufweist, die im geschlossenen Zustand des Schnappers 4 über die Nase 8 des Hauptteils 2 verbracht werden könnte. Weiters können sich Schnapper 4 in der Ausführung der Verschlusssicherung unterscheiden, welche z.B. auf die Nase geschraubt werden könnte oder ohne Schraubmechanismus einfach mittels einer weiteren Feder in Richtung der Nase vorgespannt werden könnte.

Bei einer weiteren Ausführungsvariante, die in Figur 6 dargestellt ist, könnten der Schnapper 4 und die zugehörigen Komponenten wie Feder und Stift auch entfallen, sodass das weitere Schnapperwechselteil 3' lediglich aus dem Anschlussteil 10 bestehen kann. In dieser Variante bildet das weitere Schnapperwechselteil 3' somit lediglich eine Kappe, welche das Schienensystem abdeckt, damit sich im Betrieb kein Schmutz in den Nuten 12 oder Löchern 15 ansammelt. Diese Kappe kann bevorzugt sein, wenn ein schnapperloser Werkzeugkarabiner 1 zum besonders raschen, aber ungesicherten Halten von Werkzeug gewünscht ist.

An dieser Stelle wird auf die Anbindung des Werkzeugkarabiners 1 an den Gurt eingegangen. Üblicherweise wird bei dem erfindungsgemäßen Werkzeugkarabiner 1 vorgesehen, dass das Schnapperwechselteil 3 unabhängig von der Anbindung des Werkzeugkarabiners 1 an den Gurt lösbar ist. In anderen Worten soll es auch möglich sein, das Schnapperwechselteil 3 vom Hauptteil 2 zu lösen, ohne dass der Werkzeugkarabiner 1 vom Gurt gelöst werden müsste. Dies ist beispielsweise möglich, wenn im Rücken 6 ein oder mehrere Durchgangslöcher 9 vorgesehen sind, durch welche Gurtsicherungsschrauben 9a durchgeführt werden können. Da der Rücken 6 von der Auskragung 7 gesondert ist, ist es möglich, das Schnapperwechselteil 3 auf der Auskragung 7 zu montieren, unabhängig davon, ob der Rücken 6 mit dem Gurt verbunden ist.

## Patentansprüche

1. Werkzeugkarabiner (1) zur Sicherung von Werkzeugen an einem Gurt, umfassend einen einseitig offenen Hauptteil (2) und einen schwenkbar gelagerten Schnapper (4) zum Verschließen und Öffnen des Hauptteils (2),
wobei der Werkzeugkarabiner (1) weiters ein Schnapperwechselteil (3) mit einem Anschlussteil (10) umfasst, wobei der Schnapper (4) unlösbar am Anschlussteil (10) angelenkt ist, und
wobei der Anschlussteil (10) lösbar mit dem Hauptteil (2) verbindbar ist, um das Schnapperwechselteil (3) auswechselbar am Hauptteil (2) zu montieren
**dadurch gekennzeichnet, dass**
sich der Hauptteil (2) aus einem Rücken (6), aus einer an den Rücken (6) anschließenden Auskragung (7) und aus einem an den Rücken (6) anschließenden Bogen (5) zusammensetzt, wobei die einseitige Öffnung des Hauptteils (2) zwischen der Auskragung (7) und dem Bogen (5) vorliegt, und wobei der Anschlussteil (10) lösbar mit der Auskragung (7) verbindbar ist, und
wobei der Hauptteil (2) Gurtmontagemittel umfasst, welche dazu ausgebildet sind, den Werkzeugkarabiner (1) am Gurt zu befestigen, wobei der Anschlussteil (10) unabhängig von den Gurtmontagemitteln vom Hauptteil (2) lösbar ist.

2. Werkzeugkarabiner (1) nach Anspruch 1, wobei der Hauptteil (2) zumindest eine Nut (12) oder zumindest einen Steg (11) umfasst und der Anschlussteil (10) zumindest einen zur Nut (12) gegengleichen Steg (11) oder zumindest eine zum Steg (11) gegengleiche Nut (12) umfasst, sodass der Anschlussteil (10) auf den Hauptteil (2) aufschiebbar ist, wobei die Nut (12) und der Steg (11) bevorzugt eine Schwalbenschwanzverbindung bilden.

3. Werkzeugkarabiner (1) nach Anspruch 1 oder 2, wobei der Anschlussteil (10) und der Hauptteil (2) jeweils ein Loch (14, 15) für eine Schraube (13) aufweisen, um den Anschlussteil (10) mittels der Schraube (13) am Hauptteil (2) zu fixieren.

4. Werkzeugkarabiner (1) nach einem der Ansprüche 1 bis 3, wobei der Bogen (5) an jenem Ende, das der Öffnung zugewandt ist, eine Nase (8) zum Eingriff mit dem Schnapper (4) aufweist.

5. Werkzeugkarabiner (1) nach einem der Ansprüche 1 bis 4, wobei der Rücken (6) die Gurtmontagemittel umfasst.

6. Werkzeugkarabiner (1) nach einem der Ansprüche 1 bis 5, wobei die Gurtmontagemittel eine in den Hauptteil (2) eindringende Gurtsicherungsschraube (9a) umfassen.

7. Werkzeugkarabiner (1) nach einem der Ansprüche 1 bis 6, wobei die Gurtmontagemittel eine Lasche (9b) umfassen, welche am Hauptteil (2) fixierbar ist, um ein Gurtband zwischen dem Hauptteil (2) und der Lasche (9b) zu fixieren.

8. Werkzeugkarabiner (1) nach einem der Ansprüche 1 bis 7, wobei der Schnapper (4, 4') ein Drahtschnapper oder ein Vollschnapper ist, wobei der Vollschnapper gegebenenfalls eine Verschlusssicherung aufweist.

9. Werkzeugkarabiner (1) nach einem der Ansprüche 1 bis 8, umfassend ein weiteres Schnapperwechselteil (3'), welches ein weiteres Anschlussteil (10') umfasst, an welchem ein weiterer Schnapper (4') unlösbar angelenkt ist, wobei das weitere Anschlussteil (10') lösbar mit dem Hauptteil (2) verbindbar ist und der weitere Schnapper (4') bevorzugt von einem anderen Typ als der erstgenannte Schnapper (4) ist.

10. Werkzeugkarabiner (1) nach einem der Ansprüche 1 bis 9, umfassend ein weiteres Schnapperwechselteil (3), welches ein weiteres Anschlussteil (10) ohne Schnapper (4) umfasst.

11. Gurt, insbesondere ein Hüftgurt oder ein Ganzkörpergurt, besonders bevorzugt ein Baumklettergurt, umfassend einen Werkzeugkarabiner (1) nach einem der Ansprüche 1 bis 10, wobei der Werkzeugkarabiner (1), bevorzugt ein Rücken (6) des Werkzeugkarabiners (1), am Gurt, insbesondere an einem Gurtband im Bereich der Hüfte oder an einer Beinschlaufe des Gurtes, befestigt ist.

12. Schnapperwechselteil (3) für einen Werkzeugkarabiner (1) nach einem der Ansprüche 1 bis 10, wobei das Schnapperwechselteil (3) einen Anschlussteil (10) und einen unlösbar am Anschlussteil (10) angelenkten Schnapper (4) umfasst, wobei der Anschlussteil (10) lösbar mit einem Hauptteil (2) des Werkzeugkarabiners (1) verbindbar ist.

13. Verfahren zum Wechseln eines Schnappers (4), umfassend die Schritte des Bereitstellens eines Werkzeugkarabiners (1) nach einem der Ansprüche 1 bis 10, Abnehmen des Schnapperwechselteils (3) vom Hauptteil (2), und Aufsetzen eines weiteren Schnapperwechselteils (3) auf den Hauptteil (2), welches bevorzugt einen Schnapper (4) eines anderen Typs umfasst als das erstgenannte Schnapperwechselteil (3).

14. Verfahren nach Anspruch 13 mit einem Werkzeugkarabiner (1) nach Anspruch 2, umfassend den Schritt des Einschiebens des Steges (11) in die Nut (12), um das weitere Schnapperwechselteil (3) auf den Hauptteil (2) aufzusetzen.

## Claims

1. Tool carabiner (1) for securing tools to a belt, comprising a one-sided open main part (2) and a pivotally mounted gate (4) for closing and opening the main part (2),
wherein the tool carabiner (1) further comprises a snap hook replacement part (3) with a connecting part (10), wherein the gate (4) is permanently hinged to the connecting part (10), and
wherein the connecting part (10) can be detachably connected to the main part (2) in order to mount the snap hook replacement part (3) replaceably on the main part (2)
**characterized in that**
the main part (2) comprises a back (6), a projection (7) adjoining the back (6), and an arch (5) adjoining the back (6), wherein the one-sided opening of the main part (2) is located between the projection (7) and the arch (5), and wherein the connecting part (10) can be detachably connected to the projection (7), and
wherein the main part (2) comprises belt mounting means which are designed to attach the tool carabiner (1) to the belt, wherein the connecting part (10) is independently detachable from the main part (2) of the belt mounting means.

2. Tool carabiner (1) according to claim 1, wherein the main part (2) comprises at least one groove (12) or at least one web (11) and the connecting part (10) comprises at least one web (11) opposite the groove (12) or at least one groove (12) opposite to the web (11), so that the connecting part (10) can be pushed onto the main part (2), wherein the groove (12) and the web (11) preferably form a dovetail joint.

3. Tool carabiner (1) according to claim 1 or 2, wherein the connecting part (10) and the main part (2) each have a hole (14, 15) for a screw (13) in order to fix the connecting part (10) to the main part (2) by means of the screw (13).

4. Tool carabiner (1) according to one of claims 1 to 3, wherein the bow (5) has a nose (8) at the end facing the opening for engagement with the gate (4).

5. Tool carabiner (1) according to one of claims 1 to 4, wherein the back (6) comprises the strap mounting means.

6. Tool carabiner (1) according to one of claims 1 to 5, wherein the belt mounting means comprise a belt securing screw (9a) penetrating into the main body (2).

7. Tool carabiner (1) according to one of claims 1 to 6, wherein the strap mounting means comprise a tab (9b) which can be fixed to the main body (2) in order to fix a strap between the main body (2) and the tab (9b).

8. Tool carabiner (1) according to one of claims 1 to 7, wherein the gate (4, 4') is a wire gate or a solid gate, wherein the solid gate optionally has a locking device.

9. Tool carabiner (1) according to one of claims 1 to 8, comprising a further gate replacement part (3'), which comprises a further connecting part (10'), to which a further gate (4') is permanently hinged, wherein the further connecting part (10') being releasably connectable to the main part (2) and the further gate (4') preferably being of a different type than the first-mentioned gate (4).

10. Tool carabiner (1) according to one of claims 1 to 9, comprising a further gate replacement part (3) which comprises a further connecting part (10) without a gate (4).

11. Harness, in particular a hip belt or a full-body harness, particularly preferably a tree climbing harness, comprising a tool carabiner (1) according to one of claims 1 to 10, wherein the tool carabiner (1), preferably a back (6) of the tool carabiner (1), is attached to the harness, in particular to a webbing strap in the hip area or to a leg loop of the harness.

12. Gate replacement part (3) for a tool carabiner (1) according to one of claims 1 to 10, wherein the gate replacement part (3) comprises a connecting part (10) and a gate (4) hinged inseparably to the connecting part (10), wherein the connecting part (10) is detachably connectable to a main part (2) of the tool carabiner (1).

13. Method for replacing a gate (4), comprising the steps of providing a tool carabiner (1) according to one of claims 1 to 10, removing the gate replacement part (3) from the main part (2), and placing a further gate replacement part (3) on the main part (2), which preferably comprises a gate (4) of a different type than the first-mentioned gate replacement part (3).

14. Method according to claim 13 with a tool carabiner (1) according to claim 2, comprising the step of inserting the web (11) into the groove (12) in order to place the further gate replacement part (3) onto the main part (2).

## Revendications

1. Mousqueton à outils (1) pour fixer des outils à une ceinture, comprenant une pièce principale (2) ouverte d'un côté et un doigt (4) monté de manière pivotante pour fermer et ouvrir la pièce principale (2),
le mousqueton à outils (1) comprenant en outre une pièce interchangeable du doigt (3) comprenant une pièce de liaison (10), le doigt (4) étant articulé de manière inamovible sur la pièce de liaison (10), et
la pièce de liaison (10) pouvant être raccordée de manière amovible à la pièce principale (2) afin de monter la pièce interchangeable du doigt (3) de manière interchangeable sur la pièce principale (2),
**caractérisé en ce que**
la pièce principale (2) est composée d'un dos (6), d'une saillie (7) adjacente au dos (6) et d'un arc (5) adjacent au dos (6), l'ouverture unilatérale de la pièce principale (2) étant située entre la saillie (7) et l'arc (5), et la pièce de liaison (10) pouvant être raccordée de manière amovible à la saillie (7), et
la pièce principale (2) comprenant des moyens de montage de la ceinture conçus pour fixer le mousqueton à outils (1) à la ceinture, la pièce de liaison (10) étant détachable de la pièce principale (2) indépendamment des moyens de montage de la ceinture.

2. Mousqueton à outils (1) selon la revendication 1, dans lequel la pièce principale (2) comprend au moins une rainure (12) ou au moins une nervure (11), et la pièce de liaison (10) comprend au moins une nervure (11) opposée à la rainure (12) ou au moins une rainure (12) opposée à la nervure (11) de sorte que la pièce de liaison (10) puisse être glissée sur la pièce principale (2), la rainure (12) et la nervure (11) de préférence formant un assemblage en queue d'aronde.

3. Mousqueton à outils (1) selon la revendication 1 ou 2, dans lequel la pièce de liaison (10) et la pièce principale (2) comportent chacune un trou (14, 15) pour une vis (13) afin de fixer la pièce de liaison (10) à la pièce principale (2) au moyen de la vis (13).

4. Mousqueton à outils (1) selon l'une des revendications 1 à 3, dans lequel l'arc (5) présente un ergot (8) à l'extrémité faisant face à l'ouverture pour s'engager avec le doigt (4).

5. Mousqueton à outils (1) selon l'une des revendications 1 à 4, dans lequel le dos (6) comprend les moyens de montage de la ceinture.

6. Mousqueton à outils (1) selon l'une des revendications 1 à 5, dans lequel les moyens de montage de la ceinture comprennent une vis de fixation de la ceinture (9a) qui pénètre dans la pièce principale (2).

7. Mousqueton à outils (1) selon l'une des revendications 1 à 6, dans lequel les moyens de montage de la ceinture comprennent une languette (9b) pouvant être fixée à la pièce principale (2) afin de fixer une sangle entre la pièce principale (2) et la languette (9b).

8. Mousqueton à outils (1) selon l'une des revendications 1 à 7, dans lequel le doigt (4, 4') est un doigt de fil ou un doigt plein, le doigt plein éventuellement comportant un mécanisme de verrouillage.

9. Mousqueton à outils (1) selon l'une des revendications 1 à 8, comprenant une pièce interchangeable supplémentaire du doigt (3') comprenant une pièce de liaison supplémentaire (10') à laquelle un doigt supplémentaire (4') est articulé de manière inamovible, la pièce de liaison supplémentaire (10') pouvant être raccordée de manière amovible à la pièce principale (2) et le doigt supplémentaire (4') de préférence étant d'un type différent du doigt (4) mentionné en premier.

10. Mousqueton à outils (1) selon l'une des revendications 1 à 9, comprenant une pièce interchangeable supplémentaire du doigt (3) comprenant une pièce de liaison supplémentaire (10) sans doigt (4).

11. Ceinture, notamment une ceinture de hanche ou une ceinture intégrale, plus préférablement un baudrier d'élagage, comprenant un mousqueton à outils (1) selon l'une des revendications 1 à 10, le mousqueton à outils (1), de préférence un dos (6) du mousqueton à outils (1), étant fixé à la ceinture, notamment à une sangle au niveau de la hanche ou à une boucle de jambe de la ceinture.

12. Pièce interchangeable du doigt (3) pour un mousqueton à outils (1) selon l'une des revendications 1 à 10, la pièce interchangeable du doigt (3) comprenant une pièce de liaison (10) et un doigt (4) articulé de manière inamovible sur la pièce de liaison (10), la pièce de liaison (10) pouvant être raccordée de manière amovible à une pièce principale (2) du mousqueton à outils (1).

13. Procédé de remplacement d'un doigt (4), comprenant les étapes suivantes: prévoir un mousqueton à outils (1) selon l'une des revendications 1 à 10, retirer la pièce interchangeable du doigt (3) de la pièce principale (2), et placer une pièce interchangeable supplémentaire du doigt (3) sur la pièce principale (2), qui, de préférence, comprend un doigt (4) d'un type différent de la pièce interchangeable du doigt (3) mentionnée en premier.

14. Procédé selon la revendication 13 avec un mousqueton à outils (1) selon la revendication 2, comprenant l'étape d'insertion de la nervure (11) dans la rainure (12) afin de placer la pièce interchangeable supplémentaire du doigt (3) sur la pièce principale (2).
